# EUROPEAN PATENT SPECIFICATION

(11) **EP 3 654 607 B1**
(45) Date of publication and mention of the grant of the patent: **01.04.2026**
(21) Application number: 18831664.0
(22) Date of filing: 29.06.2018
(51) Int. Cl.: G06F 13/38, H04N 19/42, H04N 19/70, G06F 13/42, H04L 65/1069, H04L 65/75, H04L 65/80, H04L 65/612, H04L 67/06, H04L 69/04, H04L 69/22

(54) **DATA TRANSMISSION METHOD, DEVICE, SERVER AND STORAGE MEDIUM**
DATENÜBERTRAGUNGSVERFAHREN, VORRICHTUNG UND SPEICHERMEDIUM
PROCÉDÉ DE TRANSMISSION DE DONNÉES, DISPOSITIF, SERVEUR ET SUPPORT DE STOCKAGE

(30) Priority: 10.07.2017 CN 201710556241
(43) Date of publication of application: 20.05.2020
(73) Proprietor: ZTE Corporation, Shenzhen, Guangdong 518057 (CN)
(72) Inventor: CHEN, Ming, Shenzhen Guangdong 518057 (CN)
(74) Representative: Aipex B.V.
(86) International application number: PCT/CN2018/093757
(87) International publication number: WO 2019/011133

(56) References cited:
- EP-A1- 1 681 824
- CN-A- 104 639 501
- CN-A- 106 648 489
- US-A1- 2014 317 418
- US-A1- 2017 060 795

## Description

### TECHNICAL FIELD

The present invention relates to, but is not limited to, the field of mobile communications and, in particular, relates to a data transfer method and apparatus, a server and a storage medium.

### BACKGROUND

With the widespread popularity of virtualization and cloud computing, users are increasingly connecting local terminals such as Universal Serial Bus (USB) video devices to cloud servers for use. video data with a large amount and a high transfer frequence occupies a considerable number of network bandwidth resources in network transmissions, and data transmitting and receiving delays have a very serious impact on user experience. Further relevant technologies are also known from US 2014/317418 A1 which relates to a client device which obtains data from a universal serial bus (USB) device and compresses the data. The client device sends the compressed data to a server using a USB redirection. The server decompresses the compressed data and sends the decompressed data to a virtual machine installed in the server. The client device remotely accesses decompressed data when the decompressed data is stored into the virtual machine.

### SUMMARY

In view of the above, embodiments of the present invention provide a data transfer method and apparatus, a server and a storage medium according to independent claims, so as to solve the problem in the existing art of a large network bandwidth occupied due to a large image data transfer amount. Further improvements and embodiments are provided in the dependent claims.

A data transfer method is provided in an embodiment of the present invention and includes steps described below.

Universal Serial Bus (USB) image data is acquired.

The USB image data is compressed according to redirect information to acquire the compressed USB image data. The redirect information includes information for redirecting transfer data.

A redirect USB transfer message is reconstructed according to the compressed USB image data.

The redirect USB transfer message is transmitted to a server.

A data transfer method is further provided in an embodiment of the present invention and includes steps described below.

A redirect Universal Serial Bus (USB) transfer message transmitted by a local apparatus is received and parsed to acquire compressed USB image data in the redirect USB transfer message.

The compressed USB image data is decompressed according to redirect information to acquire USB image data. The redirect information includes resolution information and/or image format information for redirecting transfer data.

A USB transfer message is reconstructed according to the USB image data.

The USB transfer message is outputted.

A data transfer method is further provided in an embodiment of the present invention and includes steps described below.

A redirect Universal Serial Bus (USB) transfer message transmitted by a redirect USB apparatus is received and parsed to acquire compressed USB image data in the redirect USB transfer message.

The compressed USB image data is decompressed according to redirect information to acquire USB image data. The redirect information includes resolution information for redirecting transfer data.

A USB transfer message is reconstructed according to the USB image data.

The USB transfer message is outputted.

A data transfer apparatus is further provided in an embodiment of the present invention and includes a Universal Serial Bus (USB) image data acquisition module, a compressed data acquisition module, a redirect transfer message reconstruction module and a transmitting module.

The USB image data acquisition module is configured to acquire USB image data.

The compressed data acquisition module is configured to compress the USB image data according to redirect information to acquire the compressed USB image data. The redirect information includes information for redirecting transfer data. The redirect transfer message reconstruction module is configured to reconstruct a redirect USB transfer message according to the compressed USB image data.

The transmitting module is configured to transmit the redirect USB transfer message to a server.

A server is further provided in an embodiment of the present invention and includes a redirect Universal Serial Bus (USB) transfer message acquisition module, a decompression module, a reconstructing module and an output module.

The redirect USB transfer message acquisition module is configured to receive and parse a redirect USB transfer message transmitted by a data transfer apparatus to acquire compressed USB image data in the redirect USB transfer message.

The decompression module is configured to decompress the compressed USB image data according to redirect information to acquire USB image data. The redirect information includes resolution information and/or image format information for redirecting transfer data.

The reconstructing module is configured to reconstruct a USB transfer message according to the USB image data.

The output module is configured to output the USB transfer message.

A data transfer apparatus is further provided in an embodiment of the present invention and includes a memory and a processor.

The memory is configured to store a program for data transfer.

The processor is configured to execute the program, where the program, when executed, implements the data transfer method described above.

A server is further provided in an embodiment of the present invention and includes a memory and a processor.

The memory is configured to store a program for data transfer.

The processor is configured to execute the program, where the program, when executed, implements the data transfer method described above.

A storage medium is further provided in an embodiment of the present invention. The storage medium includes a stored program, where the program, when executed, implements the data transfer method according to an embodiment of the present invention.

According to the data transfer method provided by the embodiments of the present invention, after the acquired USB image data is compressed according to the resolution information and/or the image format information in the redirect information, the redirect USB transfer message is reconstructed and transmitted to the server. The reconstructed redirect USB transfer message carries compressed image information, improving a transfer rate of image data acquired from a USB terminal in a redirect USB transfer network, and the server can be seamlessly docked with a USB video device.

### BRIEF DESCRIPTION OF DRAWINGS

FIG. 1 is a flowchart of a data transfer method according to an embodiment of the present invention;
FIG. 2 is a flowchart of a data transfer method according to an embodiment of the present invention;
FIG. 3 is a flowchart of a data transfer method according to an embodiment of the present invention;
FIG. 4 is a flowchart of a data transfer method according to an embodiment of the present invention;
FIG. 5 is a flowchart of a data transfer method according to an embodiment of the present invention;
FIG. 6 is a flowchart of a data transfer method according to an embodiment of the present invention;
FIG. 7 is a flowchart of a data transfer method according to an embodiment of the present invention;
FIG. 8 is a flowchart of a data transfer method according to an embodiment of the present invention;
FIG. 9 is a structural diagram of a data transfer apparatus according to an embodiment of the present invention;
FIG. 10 is a structural diagram of a server according to an embodiment of the present invention;
FIG. 11 is a flowchart of a data transfer method according to an embodiment of the present invention; and
FIG. 12 is a flowchart of transfer, compression and parameter adjustment in a data transfer method according to an embodiment of the present invention.

### DETAILED DESCRIPTION

A more detailed description of exemplary embodiments of the present invention will be given below with reference to the drawings. The drawings illustrate the exemplary embodiments of the present invention, but it should be understood that the present invention may be implemented in many ways and should not be limited to the embodiments set forth herein. On the contrary, these embodiments are provided for a thorough understanding of the present invention and to fully convey the scope of the present invention to those skilled in the art.

In the research process, inventors have discovered that various compression algorithms may be employed to optimize network data transfer to cope with the transfer of a large volume of data. For USB video device redirection, compression algorithms in the related art include a lossy algorithm and a lossless algorithm. Lossy compression is superior to lossless compression. Motion image compression is superior to still image compression. Lossy compression algorithms for motion images mainly include H264, MPEG4, VP8 and the like. Since both speed and efficiency are taken into consideration when one of the compression algorithms is employed. That is, a faster speed and higher compression efficiency are desired.

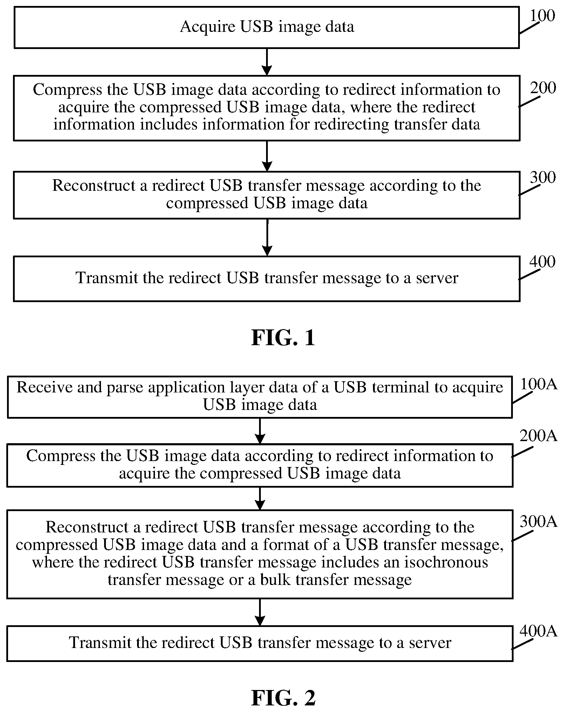

Image data needs to be obtained before image compression. A mode for collecting video image data of a USB video device determines a mode for displaying the USB video device and a video image under a desktop operating system of a remote login user. The mode for collecting the video image data of the USB video device includes manners described below. (1) A transparent transmission of a USB command is directly performed. This manner has strongest adaptability to devices and application software. (2) Frames of images are acquired through an Application Programming Interface (API) of the operating system. This manner is most convenient to invoke and has lower adaptability to the devices and the application software since part of information transmitted with images is lost. FIG. 1 is a flowchart of a data transfer method according to an embodiment of the present invention. As shown in FIG. 1, the method includes steps described below.

In step 100, USB image data is acquired.

In an embodiment, the USB image data includes video data, photo data and the like. The step of acquiring the USB image data includes parsing image data in a USB transfer message, and further includes directly acquiring the image data from an upper-layer application of a USB terminal.

In step 200, the USB image data is compressed according to redirect information to acquire the compressed USB image data. The redirect information includes information for redirecting transfer data.

In an embodiment, in an application for redirecting the USB terminal, a data transfer apparatus, that is, a local apparatus is connected to the USB terminal to acquire the USB image data. Then the local apparatus is connected to a remote server to transmit the acquired USB image data to an operating system in the remote server. The operating system responds to the acquired USB image data, and provides service for a user. The redirect information includes resolution information and/or image format information for redirecting the transfer data when the USB image data is transmitted to the remote server. The resolution information and/or the image format information include at least one of an interface serial number, a format serial number, a frame serial number, a relationship between a width and a height of a resolution, a format or resolution parameter of the USB video device, a highest resolution, a target resolution, a lowest resolution, a default resolution, and an anchor resolution.

The USB image data is compressed according to a resolution set in the redirect information. Taking compression of a motion image as an example, if the anchor resolution is set in the redirect information (scaling a high-resolution video down or a low-resolution video up to the anchor resolution), the USB image data needs to be scaled before transmitted into an interface of a motion image compression and coding algorithm for compression to obtain the compressed USB image data.

In an embodiment, the redirect information includes the resolution information and/or the image format information for redirecting the transfer data.

In step 300, a redirect USB transfer message is reconstructed according to the compressed USB image data.

In an embodiment, the redirect USB transfer message includes a redirect USB isochronous transfer message or a redirect USB bulk transfer message.

The redirect USB transfer message includes an isochronous transfer message (a return result of Isochronous Transfer IN) and a bulk transfer message (a return result of Bulk Transfer IN) in USB messages.

The redirect USB transfer message is reconstructed according to the compressed USB image data in a manner described below. When the acquired USB image data is the image data parsed from the USB transfer message, the step of reconstructing the redirect USB transfer message includes replacing image data in the isochronous transfer message (the return result of Isochronous Transfer IN) or the bulk transfer message (the return result of Bulk Transfer IN) with the compressed image data.

When the acquired USB image data is the image data directly acquired from the upper-layer application of the USB terminal, the compressed USB image data needs to be placed in a corresponding field according to a message format of the isochronous transfer message (the return result of Isochronous Transfer IN) or the bulk transfer message (the return result of Bulk Transfer IN) to reconstruct the isochronous transfer message (the return result of Isochronous Transfer IN) or the bulk transfer message (the return result of Bulk Transfer IN).

In an embodiment, reconstructing the redirect USB transfer message according to the compressed USB image data and a format of the USB transfer message includes steps described below. The format of the USB transfer message is acquired.

The compressed USB image data is encapsulated in a field for transferring a data packet in the format of the USB transfer message to acquire the redirect USB transfer message.

In step 400, the redirect USB transfer message is transmitted to a server.

In an embodiment, the reconstructed redirect USB transfer message is placed into a queue to be transmitted and transmitted to the server, that is, the remote server to complete the transfer of the USB image data.

In practical applications, compression and transmission of the USB image data may be implemented by setting a queue to be compressed and the queue to be transmitted. The USB image data is placed into the queue to be compressed, and a signal for notifying data arrival is set, and a current result is covered with a new result from a subsequent queue to be transmitted. If the queue to be transmitted is empty, the current result is emptied, a return length is set to zero, and a final result is forwarded. Meanwhile, after a data arrival signal is received in another thread, data in the queue to be compressed is processed.

In the redirect data transfer method for the USB device according to this embodiment, after the acquired USB image data is compressed according to the resolution information and/or the image format information in the redirect information, the redirect USB transfer message is reconstructed and transmitted to the remote server. The reconstructed redirect USB transfer message carries compressed image information, improving a transfer rate of the image data acquired from the USB terminal in a redirect USB transfer network, and the remote server can be seamlessly docked with the USB video device due to the reconstruction of the USB transfer message.

The present invention further provides an embodiment. In this embodiment, when the user operates an application on the remote server to take photos, before the step of compressing the USB image data according to the redirect information to acquire the compressed USB image data, the method further includes receiving photo information. The step of compressing the USB image data according to the redirect information to acquire the compressed USB image data further includes compressing the USB image data according to the redirect information and the photo information to acquire the compressed USB image data.

In an embodiment, the received photo information includes a received Video Streaming Requests-Still Image Trigger Control message. If the USB terminal is a camera, a mode for acquiring the photo information includes extracting a corresponding image from USB image information as a photo result. The subsequent flow is the same as that in embodiment 1. The remote server performs parsing according to the corresponding flow and extracts the photo information.

In this embodiment, after the USB image data is compressed according to the received photo information, the USB transfer message is reconstructed, so that the photo information can be acquired for the USB image data, improving the practicability of the redirect data transfer method for the USB device provided by the present invention and transfer efficiency of the photo information.

FIG. 2 is a flowchart of a data transfer method according to an embodiment of the present invention. As shown in FIG. 2, the method includes steps described below.

In step 100A, application layer data of a USB terminal is received and parsed to acquire USB image data.

In an embodiment, during practical use of the USB terminal, it is common to acquire image data after the USB terminal is invoked by using an application. A USB transfer message of the USB terminal cannot be directly acquired through the application to parse image data in the USB transfer message. However, the USB image data of the USB terminal may be directly acquired through the application.

In step 200A, the USB image data is compressed according to redirect information to acquire the compressed USB image data.

In an embodiment, step 200 A is the same as step 200 in the embodiment 1. The redirect information includes device information of the USB terminal and various information needed in the subsequent step of reconstructing the USB transfer message. The redirect information may be acquired through presetting or an insertion of the USB terminal.

In step 300A, a redirect USB transfer message is reconstructed according to the compressed USB image data and a format of the USB transfer message. The redirect USB transfer message includes an isochronous transfer message or a bulk transfer message.

In an embodiment, since the USB image data is not acquired by parsing the USB transfer message, the compressed USB image data needs to be filled according to the format of the USB transfer message to reconstruct a USB transfer message.

In step 400A, the redirect USB transfer message is transmitted to a server.

In an embodiment, step 400A is the same as step 400 in the embodiment 1.

In this embodiment, the image data is directly acquired from an upper-layer application of the USB terminal. After the image data is compressed, the compressed image data is filled according to the format of the USB transfer message to reconstruct the USB transfer message and the USB image data is transmitted to a remote server. Due to the compression of the image data, image data transfer efficiency of redirect USB transfer data is greatly improved. Due to the reconstruction of a USB message, the USB message is used for interactions between a local apparatus and the remote server, so that a user may directly and seamlessly operate and use the USB terminal connected to the local apparatus through the remote server without conversions through other protocols, and the problem that the USB terminal cannot be directly operated is also solved.

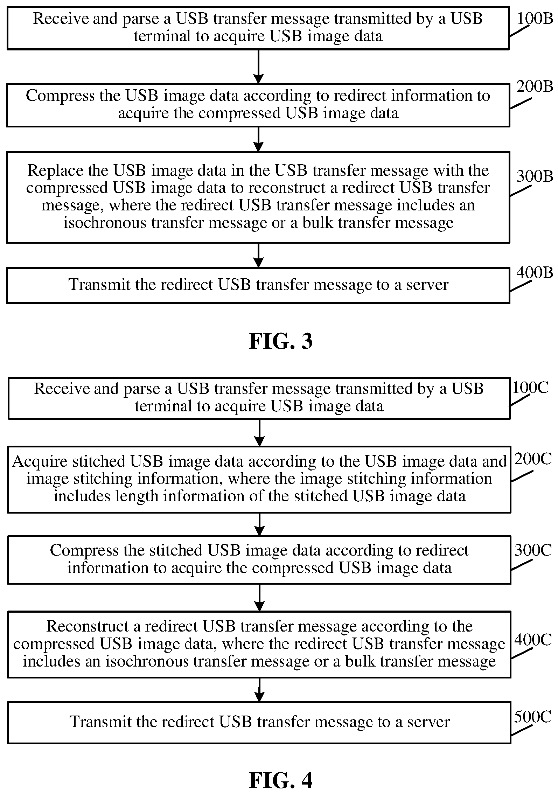

FIG. 3 is a flowchart of a data transfer method according to an embodiment of the present invention. As shown in FIG. 3, the method includes steps described below.

In step 100B, a USB transfer message transmitted by a USB terminal is received and parsed to acquire USB image data.

In an embodiment, after being connected to the USB terminal, a local apparatus may communicate with a remote server through a transparent transmission of a USB message of the USB terminal. After receiving the USB transfer message transmitted by the USB terminal, the local apparatus parses the USB transfer message to acquire image data in the USB transfer message.

In step 200B, the USB image data is compressed according to redirect information to acquire the compressed USB image data.

In an embodiment, the redirect information includes device information of the USB terminal and various information needed in the subsequent step of reconstructing the USB transfer message. The redirect information may be acquired through presetting or an insertion of the USB terminal.

In step 300B, the USB image data in the USB transfer message is replaced with the compressed USB image data to reconstruct a redirect USB transfer message. The redirect USB transfer message includes an isochronous transfer message or a bulk transfer message.

In an embodiment, since the image data before compression is acquired from the USB transfer message received from the USB terminal, when the redirect USB transfer message is reconstructed, the USB transfer message may be reconstructed by replacing the image data before compression in the USB transfer message with the compressed image data to acquire the redirect USB transfer message. According to a requirement, image data before compression in multiple USB transfer messages may be compressed into one or more reconstructed redirect USB transfer messages.

In step 400B, the redirect USB transfer message is transmitted to the server.

In an embodiment, the image data is acquired by parsing the USB transfer message transmitted by the USB terminal and compressed, the image data before compression in the USB transfer message is replaced with the compressed image data to reconstruct the USB transfer message, and the USB image data is transmitted to the remote server. Image data transfer efficiency of redirect USB transfer data is greatly improved due to the compression of the image data.

FIG. 4 is a flowchart of a data transfer method according to an embodiment of the present invention. As shown in FIG. 4, the method in which a data transfer apparatus stitches and compresses image data includes step described below.

In step 100C, USB image data is acquired.

In step 200C, stitched USB image data is acquired according to the USB image data and image stitching information. The image stitching information includes length information of the stitched USB image data.

In an embodiment, to improve compression efficiency of image data, the USB image data in multiple USB transfer messages may be stitched according to a preset image stitching length and then compressed. For example, a frame of USB image data may be stitched and compressed.

Similarly, when the image data is acquired from an upper-layer application, if the acquired image data has been a frame of image, the image data may be directly compressed; if the image data is smaller than one frame, one frame may be stitched and compressed.

In step 300C, the stitched USB image data is compressed according to redirect information to acquire the compressed USB image data.

In step 400C, a redirect USB transfer message is reconstructed according to the compressed USB image data. The redirect USB transfer message includes an isochronous transfer message or a bulk transfer message.

In step 500C, the redirect USB transfer message is transmitted to a server.

In this embodiment, the USB image data is stitched before being compressed, improving the compression efficiency of the image data and further improving image data transfer efficiency of redirect USB transfer data.

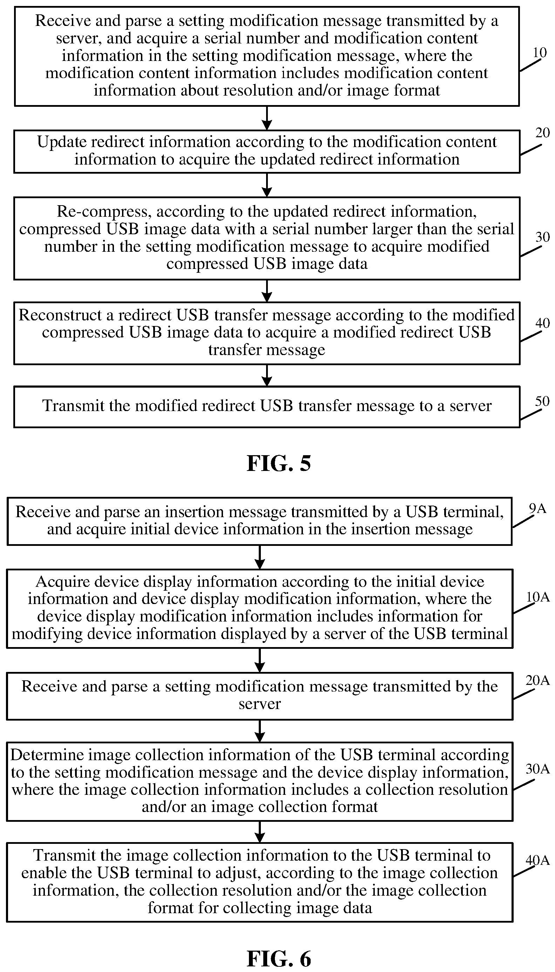

FIG. 5 is a flowchart of a data transfer method according to an embodiment of the present invention. As shown in FIG. 5, the method in which a data transfer apparatus sets a resolution includes steps described below.

In step 10, a setting modification message transmitted by a server is received and parsed, and a serial number and modification content information in the setting modification message are acquired. The modification content information includes modification content information about resolution and/or image format.

In an embodiment, when a user needs to modify a resolution, a display resolution of an image is modified through an interface of an application provided by a remote server. When the user operates a camera playback program interface to modify the resolution, the remote server transmits a corresponding message, such as a Video Streaming Requests-Video Probe and Commit Controls message, to a local apparatus.

In step 20, redirect information is updated according to the modification content information to acquire the updated redirect information.

In an embodiment, the local apparatus modifies the redirect information according to the Video Streaming Requests-Video Probe and Commit Controls message. At least one of an interface serial number, a format serial number, a frame serial number, a relationship between a width and a height of the resolution, a format or resolution parameter of a USB video device, a highest resolution, a target resolution, a lowest resolution, a default resolution, and an anchor resolution is modified. The updated redirect information is acquired after the modification.

In step 30, the compressed USB image data with a serial number larger than the serial number in the setting modification message is re-compressed according to the updated redirect information to acquire modified compressed USB image data.

In an embodiment, since the resolution is modified by the user, in practical use, in order to improve user experience, the image data is generally compressed and transmitted after being cached. In this mode, after the resolution is modified, the cached image data needs to be re-compressed and re-transmitted according to the modified resolution. Specifically, a serial number in the Video Streaming Requests-Video Probe and Commit Controls message is acquired, and the cached image data with a serial number larger than the serial number in the Video Streaming Requests-Video Probe and Commit Controls message is re-compressed.

In step 40, a redirect USB transfer message is reconstructed according to the modified compressed USB image data to acquire modified redirect USB transfer message.

In an embodiment, the redirect USB transfer message is reconstructed according to re-compressed USB image data. The step of reconstructing the redirect USB transfer message is the same as step 300 in the embodiment described above.

In step 50, the modified redirect USB transfer message is transmitted to the server.

In an embodiment, the redirect information may be modified according to acquired resolution setting information transmitted by the remote server, and after the transmitted image data is recompressed, the USB transfer message is reconstructed again, transmitted to the remote server, and played according to the resolution modified by the user. Since a resolution modification function is provided, this embodiment may improve transfer efficiency of the USB image data and provide more flexible playback of the image data and the like.

FIG. 6 is a flowchart of a data transfer method according to an embodiment of the present invention. As shown in FIG. 6, the method in which a data transfer apparatus modifies display information of a USB device includes steps described below.

In step 9A, an insertion message transmitted by a USB terminal is received and parsed, and initial device information in the insertion message is acquired.

In an embodiment, when the USB terminal is inserted into a local apparatus for the first time, the corresponding insertion message is transmitted, so that the local apparatus establishes a device object for the USB terminal according to the insertion message, and installs and loads a corresponding driver to use the USB terminal. The insertion message includes a return message of a Standard Device Requests-Get Descriptor, and the return message of the Standard Device Requests-Get Descriptor includes a device type of the USB terminal and resolution list information of the USB terminal.

In step 10A, device display information is acquired according to the initial device information and device display modification information. The device display modification information includes information for modifying device information displayed by a server of the USB terminal.

In an embodiment, the device display modification information includes a selectable resolution list, which includes display resolution information of the USB terminal provided by a remote server for a user to display. In order to better utilize a network transmission bandwidth and avoid an unnecessary transmission of a large volume of data, when the USB terminal has so high a resolution that is beyond a usage requirement of the user, the remote server only provides resolution information within a defined range for the user, to prevent the user from selecting a resolution beyond the usage requirement and avoid wastes of the transmission bandwidth.

When the resolution list in the device display modification information is inconsistent with a resolution list in the initial device information in the insertion message transmitted by the USB terminal, resolutions in the initial device information needs to be corresponded with resolutions in the device display modification information to acquire the device display information, and a correspondence between resolution information before modification and resolution information after modification is recorded.

In step 20A, a setting modification message transmitted by the server is received and parsed.

In step 30A, image collection information of the USB terminal is determined according to the setting modification message and the device display information. The image collection information includes a collection resolution and/or an image collection format.

In an embodiment, the user modifies the resolution and the modification of the resolution needs to be transmitted to the USB terminal through resolution setting information, a Video Streaming Requests-Video Probe and Commit Controls message, so that the USB terminal collects image data according to new resolution information.

For example, a device insertion message, a return result of a Standard Device Requests-Get Descriptor, is parsed and an interface serial number (bInterfaceNumber), a format serial number (bFormatIndex), a frame serial number (bFrameIndex) and a relationship between a width (wWidth) and a height (wHeight) of the resolution are indexed. If a format/resolution parameter of a USB video device needs to be adjusted (a value is modified according to a definition of Video Streaming Interface Descriptors-Payload Format Descriptors/Video Frame Descriptor), or a highest resolution needs to be decreased (a frame whose resolution is smaller than a target resolution is deleted and the frame serial number bFrameIndex is reordered according to the definition of Video Streaming Interface Descriptors-Payload Format Descriptors/Video Frame Descriptor), or a lowest resolution needs to be increased (a frame whose resolution is larger than the target resolution is deleted and the frame serial number bFrameIndex is reordered according to the definition of Video Streaming Interface Descriptors-Payload Format Descriptors/Video Frame Descriptor), or a default resolution needs to be modified (the frame serial number bFrameIndex is reordered, a Video Frame Descriptor of a frame with the default resolution is ordered at a first position, a position of bFrameIndex 1, and a default frame serial number bDefaultFrameIndex in Payload Format Descriptors is modified to 1 according to the definition of Video Streaming Interface Descriptors-Payload Format Descriptors/Video Frame Descriptor), a high resolution needs to be scaled down or a low resolution needs to be scaled up to an anchor resolution (a frame with the target resolution is increased and the frame serial number bFrameIndex is reordered according to the definition of Video Streaming Interface Descriptors-Payload Format Descriptors/Video Frame Descriptor), and so on, the return result of the Standard Device Requests-Get Descriptor is also modified and a correspondence between the return result after modification and return result before modification is recorded and indexed.

In step 40A, the image collection information is transmitted to the USB terminal to enable the USB terminal to adjust, according to the image collection information, the collection resolution and/or the image collection format for collecting image data.

In this embodiment, the display information of the USB terminal is set according to requirements, and a correspondence between the display information of the USB terminal and the initial device information of the USB terminal when the USB terminal is inserted is established, so that the user may be prevented from performing image transfer beyond the requirements of the user, improving transmission bandwidth utilization efficiency. When the resolution is modified by the user, the correspondence between the modified resolution and an original resolution is determined again, improving the practicability of this embodiment.

When a non-redirect sub-apparatus is included in the USB terminal, information of the non-redirect sub-apparatus is acquired according to the initial device information in the insertion message of the USB terminal, and the non-redirect sub-apparatus is deleted from a redirect USB transfer message according to the information of the non-redirect sub-apparatus.

In an embodiment, for example, if the USB terminal includes a microphone or another sub-device and a system requires that these sub-devices are not redirected, an Interface Association Descriptor of the microphone or another sub-device is found in the return result of the Standard Device Requests-Get Descriptor, and data from the Interface Association Descriptor to an Interface Association Descriptor of a next other device is deleted or data from the Interface Association Descriptor to the end of the whole return result of the Standard Device Requests-Get Descriptor is deleted.

In the redirect data transfer method for the USB device according to this embodiment, the non-redirect sub-apparatus is deleted from the reconstructed redirect USB transfer message, satisfying various usage requirements of the USB terminal.

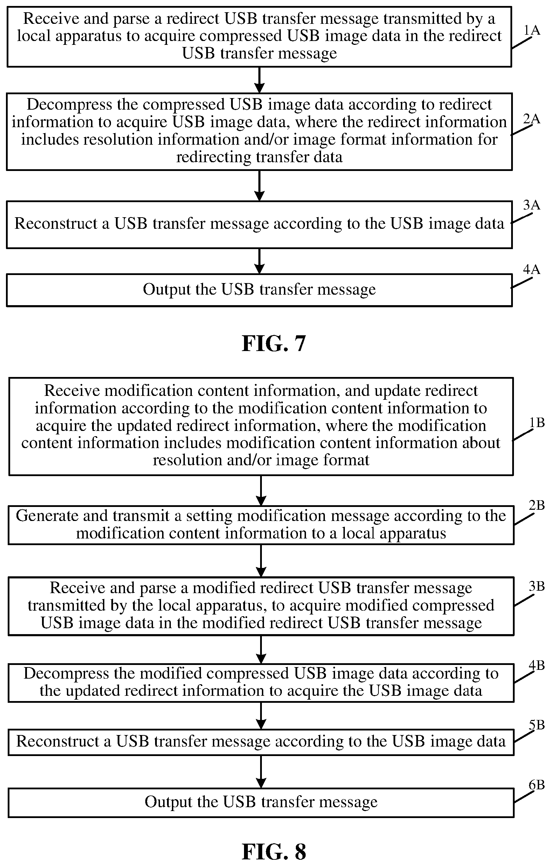

FIG. 7 is a flowchart of a data transfer method according to an embodiment of the present invention. As shown in FIG. 7, the method includes steps described below.

In step 1A, a redirect USB transfer message transmitted by a local apparatus is received and parsed to acquire compressed USB image data in the redirect USB transfer message.

In an embodiment, the compressed USB image data is acquired by receiving and parsing the redirect USB transfer message transmitted by the local apparatus connected to a USB terminal.

In step 2A, the compressed USB image data is decompressed according to redirect information to acquire USB image data. The redirect information includes resolution information and/or image format information for redirecting transfer data.

In an embodiment, the compressed USB image data is decompressed according to the redirect information. The redirect information is the same as redirect information in a local terminal and synchronizes in real time with redirection information in the local apparatus. The redirect information may be stored in the local apparatus and a remote server separately, and may be stored in a storage medium to be read by the local apparatus and the remote server.

In step 3A, a USB transfer message is reconstructed according to the USB image data.

In an embodiment, the USB transfer message is reconstructed according to the USB image data through decompression. The USB transfer message includes an isochronous transfer message or a bulk transfer message. Therefore, when the local apparatus acquires image data by directly receiving the USB transfer message transmitted by the USB terminal, the USB transfer message reconstructed by the remote server is a USB transfer message received by the local apparatus. When the local apparatus acquires the image data by receiving and parsing application layer data of the USB terminal, the remote server can be seamlessly docked with the USB terminal.

In step 4A, the USB transfer message is outputted.

In an embodiment, after being outputted, the USB transfer message is transmitted to a USB device on the remote server for the USB device to drive and play the image data in the USB transfer message.

In the redirect data transfer method for the USB device on the remote server according to this embodiment, the received redirect USB transfer message is decompressed according to the redirect information which is the same as that of the local apparatus to acquire and output the USB image data. The reconstructed redirect USB transfer message carries compressed image information, improving a transfer rate of the image data acquired from the USB terminal in a redirect USB transfer network, and the remote server can be seamlessly docked with the USB video device due to the reconstruction of the USB transfer message.

FIG. 8 is a flowchart of a data transfer method according to an embodiment of the present invention. As shown in FIG. 8, the method includes steps described below.

In step 1B, modification content information is received, and redirect information is updated according to the modification content information to acquire the updated redirect information. The modification content information includes modification content information about resolution and/or image format.

In an embodiment, when a user needs to modify resolution information, an application of a remote server receives resolution setting information inputted by the user. A specific description is the same as step 10 in the embodiment 5.

In step 2B, a setting modification message is generated and transmitted to a local apparatus according to the modification content information.

In step 3B, a modified redirect USB transfer message transmitted by the local apparatus is received and parsed to acquire modified compressed USB image data in the modified redirect USB transfer message.

In an embodiment, the modified redirect USB transfer message transmitted by the local apparatus after the resolution is modified is received and parsed to acquire compressed USB image data in the modified redirect USB transfer message.

In step 4B, the modified compressed USB image data is decompressed according to the updated redirect information to acquire USB image data.

In step 5B, a USB transfer message is reconstructed according to the USB image data.

In step 6B, the USB transfer message is outputted.

In this embodiment, the redirect information may be modified by the remote server according to the acquired resolution setting message and transmitted by the remote server to the local apparatus to re-compress the image data transmitted to the local apparatus, and the USB transfer message is reconstructed and transmitted to the remote server for the remote server to play with the resolution modified by the user. Since a resolution modification function is provided, this embodiment may improve USB image data transfer efficiency and provide more flexible playback of the image data and the like.

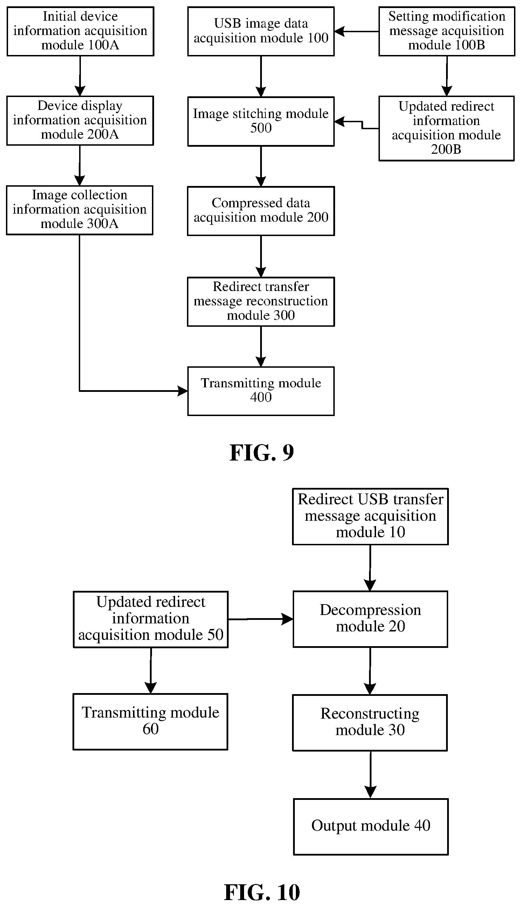

FIG. 9 is a structural diagram of a data transfer apparatus according to an embodiment of the present invention. As shown in FIG. 9, the data transfer apparatus includes a USB image data acquisition module 100, a compressed data acquisition module 200, a redirect transfer message reconstruction module 300, a transmitting module 400, an image stitching module 500, a setting modification message acquisition module 100B, an updated redirect information acquisition module 200B, an initial device information acquisition module 100A, a device display information acquisition module 200A and an image collection information acquisition module 300A.

The USB image data acquisition module 100 is configured to acquire USB image data. The USB image data acquisition module includes a first USB image data acquisition unit and a second USB image data acquisition unit. The first USB image data acquisition unit is configured to receive and parse application layer data of a USB terminal to acquire the USB image data. The second USB image data acquisition unit is configured to receive and parse a USB transfer message transmitted by the USB terminal to acquire the USB image data.

The compressed data acquisition module 200 is configured to compress the USB image data according to redirect information to acquire the compressed USB image data. The redirect information includes resolution information and/or image format information for redirecting transfer data. The compressed data acquisition module 200 is further configured to compress stitched USB image data according to the redirect information to acquire the compressed USB image data. The compressed data acquisition module 200 is further configured to re-compress the compressed USB image data with a serial number larger than a serial number in a setting modification message according to updated redirect information to acquire the modified compressed USB image data.

The redirect transfer message reconstruction module 300 is configured to reconstruct a redirect USB transfer message according to the compressed USB image data. The redirect USB transfer message includes an isochronous transfer message or a bulk transfer message. The redirect transfer message reconstruction module 300 includes a first redirect transfer message reconstruction unit and a second redirect transfer message reconstruction unit. The first redirect transfer message reconstruction unit is configured to reconstruct the redirect USB transfer message according to the compressed USB image data and a format of the USB transfer message. The second redirect transfer message reconstruction unit is configured to replace the USB image data in the USB transfer message with the compressed USB image data to reconstruct the redirect USB transfer message, and is further configured to reconstruct the redirect USB transfer message according to the modified compressed USB image data to acquire modified redirect USB transfer message.

The transmitting module 400 is configured to transmit the redirect USB transfer message to a server and transmit the modified redirect USB transfer message to a remote server. The transmitting module 400 is further configured to transmit image collection information to the USB terminal to enable the USB terminal to adjust, according to the image collection information, a collection resolution and/or an image collection format for collecting image data.

The image stitching module 500 is configured to acquire the stitched USB image data according to the USB image data and image stitching information. The image stitching information includes length information of the stitched USB image data.

The setting modification message acquisition module 100B is configured to receive and parse the setting modification message transmitted by the remote server, and acquire the serial number and modification content information in the setting modification message. The modification content information includes modification content information about resolution and/or image format.

The updated redirect information acquisition module 200B is configured to update the redirect information according to the modification content information to acquire the updated redirect information.

The initial device information acquisition module 100A is configured to receive and parse an insertion message transmitted by the USB terminal, and acquire initial device information in the insertion message.

The device display information acquisition module 200A is configured to acquire device display information according to the initial device information and device display modification information. The device display modification information includes information for modifying device information displayed by the remote server of the USB terminal.

The image collection information acquisition module 300A is configured to determine the image collection information of the USB terminal according to the setting modification message and the device display information. The image collection information includes the collection resolution and/or the image collection format.

In an embodiment of the present invention, the above-mentioned function modules may be integrated according to hardware configuration requirements. Practical functions of the USB image data acquisition module 100, the compressed data acquisition module 200, the image stitching module 500, the resolution setting information acquisition module 100B, the updated redirect information acquisition module 200B, the initial device information acquisition module 100A, the device display information acquisition module 200A and the image collection resolution acquisition module 300A are generally implemented by a kernel module 2. Functions of the transmitting module 400 are implemented by a redirect terminal communication module 4. Functions of the redirect transfer message reconstruction module 300 are implemented by a redirect terminal cache compression reconstruction module 3. The redirect terminal cache compression reconstruction module 3 may be independent of the redirect terminal communication module 4, or the two modules may be integrated into one function module. To preserve the existing functional structure to the maximum extent, the redirect terminal cache compression reconstruction module 3 may be connected separately to the redirect terminal communication module 4. In addition, a USB video terminal 1 is connected to the kernel module 2.

The local apparatus in this embodiment compresses the acquired USB image data according to the redirect resolution information and the like, reconstructs and transmits the redirect USB transfer message to the remote server. The reconstructed redirect USB transfer message carries compressed image information, improving a transfer rate of the image data acquired from the USB terminal in a redirect USB transfer network, and the remote server can be seamlessly docked with a USB video device due to the reconstruction of the USB transfer message.

FIG. 10 is a structural diagram of a server according to an embodiment of the present invention. As shown in FIG. 10, the server includes a redirect USB transfer message acquisition module 10, a decompression module 20, a reconstructing module 30, an output module 40, an updated redirect information acquisition module 50 and a transmitting module 60.

The redirect USB transfer message acquisition module 10 is configured to receive and parse a redirect USB transfer message transmitted by a local apparatus to acquire compressed USB image data in the redirect USB transfer message. The redirect USB transfer message acquisition module 10 is further configured to receive and parse a modified redirect USB transfer message transmitted by the local apparatus to acquire modified compressed USB image data in the modified redirect USB transfer message.

The decompression module 20 is configured to decompress the compressed USB image data according to redirect information to acquire USB image data. The redirect information includes resolution information and/or image format information for redirecting transfer data. The decompression module 20 is further configured to decompress the modified compressed USB image data according to updated redirect information to acquire the USB image data.

The reconstructing module 30 is configured to reconstruct a USB transfer message according to the USB image data.

The output module 40 is configured to output the USB transfer message.

The updated redirect information acquisition module 50 is configured to receive modification content information, and update the redirect information according to the modification content information to acquire the updated redirect information. The modification content information includes modification content information about resolution and/or image format.

The transmitting module 60 is configured to generate and transmit a setting modification message according to the modification content information to the local apparatus.

The server in this embodiment decompresses the received redirect USB transfer message according to the redirect information which is the same as that of the local apparatus to acquire and output the USB image data. The reconstructed redirect USB transfer message carries compressed image information, improving a transfer rate of the image data acquired from the USB terminal in a redirect USB transfer network, and the server can be seamlessly docked with a USB video device due to the reconstruction of the USB transfer message.

In an embodiment of the present invention, the above-mentioned function modules may be integrated according to hardware configuration requirements. Functions of the redirect USB transfer message acquisition module 10 and the transmitting module 50 are implemented by a redirect server communication module 5. Functions of the decompression module 20 are implemented by a redirect server cache decompression reduction module 6. Functions of the updated redirect information acquisition module 40 are implemented by a device mapping kernel (drive) module 7. Functions of a display module 30 are implemented by a user application (layer) program 9. A remote server further includes a (upper-layer) device driver program 8 for loading a driver of a USB video device.

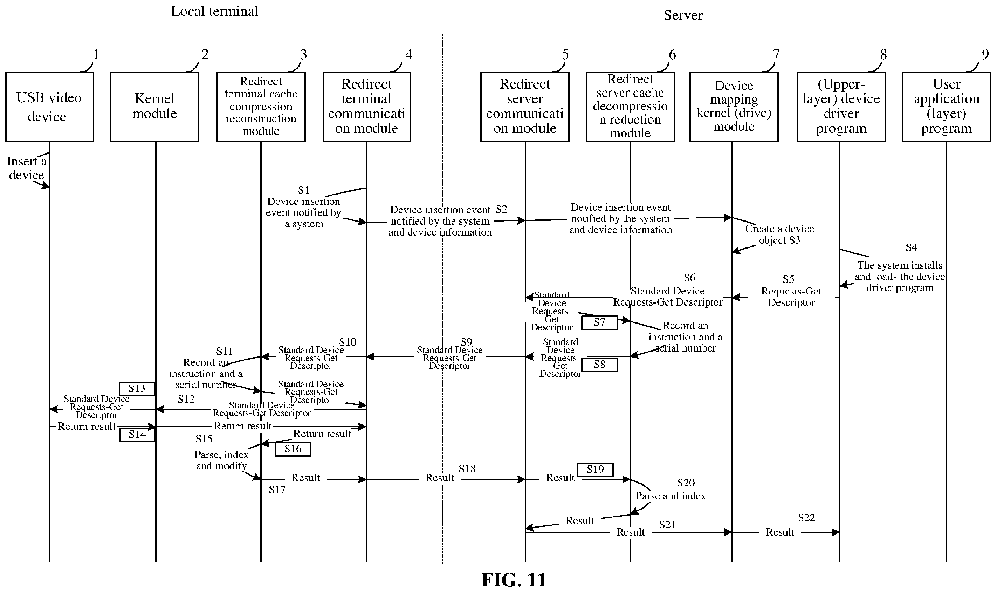

FIG. 11 is a flowchart of a data transfer method according to an embodiment of the present invention. As shown in FIG. 11, the method includes steps described below.

In S1, a redirect terminal cache compression reconstruction module 3 learns a device insertion event notified by a system, and acquires and transmits device information to a redirect server communication module 4.

In S2, the redirect server communication module 4 transmits the device insertion event notified by the system and the device information to a device mapping kernel module 7.

In S3, the device mapping kernel module 7 creates a device object according to the device insertion event notified by the system and the device information.

In S4, a server operating system (device driver program 8) installs and loads a device driver for the device object.

In S5, the system loads the device driver program 8 to transmit a Standard Device Requests-Get Descriptor to the device mapping kernel module 7.

In S6, the device mapping kernel module 7 forwards the Standard Device Requests-Get Descriptor to the redirect server communication module 5.

In S7, the redirect server communication module 5 forwards the Standard Device Requests-Get Descriptor to a redirect server cache decompression reduction module 6.

In S8, the redirect server cache decompression reduction module 6 records a type and a serial number of a controls request (the record is used for locating a response result of the request), and returns the Standard Device Requests-Get Descriptor to the redirect server communication module 5.

In S9, the redirect server communication module 5 forwards the Standard Device Requests-Get Descriptor to a redirect terminal communication module 4.

In S10, the redirect terminal communication module 4 forwards the Standard Device Requests-Get Descriptor to a redirect terminal cache compression reconstruction module 6.

In S11, the redirect terminal cache compression reconstruction module 6 records the type and the serial number of the controls request (the record is used for locating the response result of the request), and returns the Standard Device Requests-Get Descriptor to the redirect terminal communication module 4.

In S12, if a USB transparent transmission mode is used, the redirect terminal communication module 4 forwards the Standard Device Requests-Get Descriptor to a kernel module 2; otherwise, the redirect terminal communication module 4 acquires a device attribute, a resolution list and the like, and constructs a return result of the Standard Device Requests-Get Descriptor according to a USB protocol and a USB video device protocol. The method jumps to step S16.

In S13, the kernel module 2 submits the Standard Device Requests-Get Descriptor to device hardware, a USB video device 1.

In S14, the device hardware, the USB video device 1, responds to the request, and the kernel module 2 acquires the return result.

In S15, the kernel module 2 forwards the return result of the Standard Device Requests-Get Descriptor to the redirect terminal communication module 4.

In S16, the redirect terminal communication module 4 forwards the return result of the Standard Device Requests-Get Descriptor to the redirect terminal cache compression reconstruction module 3.

In S17, the redirect terminal cache compression reconstruction module 3 determines that the return result is the return result of the Standard Device Requests-Get Descriptor based on the foregoing records, parses the return result, and indexes an interface serial number (bInterfaceNumber), a format serial number (bFormatIndex), a frame serial number (bFrameIndex) and a relationship between a width (wWidth) and a height (wHeight) of the resolution. If a format/resolution parameter of the USB video device needs to be adjusted (a value is modified according to a definition of Video Streaming Interface Descriptors-Payload Format Descriptors/Video Frame Descriptor), or a highest resolution needs to be decreased (a frame whose resolution is smaller than a target resolution is deleted and the frame serial number bFrameIndex is reordered according to the definition of Video Streaming Interface Descriptors-Payload Format Descriptors/Video Frame Descriptor), or a lowest resolution needs to be increased (a frame whose resolution is larger than the target resolution is deleted and the frame serial number bFrameIndex is reordered according to the definition of Video Streaming Interface Descriptors-Payload Format Descriptors/Video Frame Descriptor), or a default resolution needs to be modified (the frame serial number bFrameIndex is reordered, a Video Frame Descriptor of a frame with the default resolution is ordered at a first position, a position of bFrameIndex 1, and a default frame serial number bDefaultFrameIndex in Payload Format Descriptors is modified to 1 according to the definition of Video Streaming Interface Descriptors-Payload Format Descriptors/Video Frame Descriptor), a high resolution needs to be scaled down or a low resolution needs to be scaled up to an anchor resolution (a frame with the target resolution is increased and the frame serial number bFrameIndex is reordered according to the definition of Video Streaming Interface Descriptors-Payload Format Descriptors/Video Frame Descriptor), and so on, the return result of the Standard Device Requests-Get Descriptor is also modified and a correspondence between the return result after modification and the return result before modification is recorded and indexed. If the camera includes a microphone or another sub-device and the system requires that these sub-devices are not redirected, an Interface Association Descriptor of the microphone or another sub-device is found in the return result of the Standard Device Requests-Get Descriptor, and the Interface Association Descriptor and an Interface Association Descriptor of a next other device are deleted or the Interface Association Descriptor to an Interface Association Descriptor at the end of the whole return result of the Standard Device Requests-Get Descriptor are deleted. A final result is transmitted to the redirect terminal communication module.

In S 18, the redirect terminal communication module 4 forwards the received result of the Standard Device Requests-Get Descriptor to the redirect server communication module 5.

In S19, the redirect server communication module 5 forwards the received result of the Standard Device Requests-Get Descriptor to the redirect server cache decompression reduction module 6.

In S20, the redirect server cache decompression reduction module 6 parses the received result of the Standard Device Requests-Get Descriptor, indexes the interface serial number (bInterfaceNumber), the format serial number (bFormatIndex), the frame serial number (bFrameIndex) and the relationship between the width (wWidth) and the height (wHeight) of the resolution, and return the result to the redirect server communication module 5.

In S21, the redirect server communication module 5 forwards the received result of the Standard Device Requests-Get Descriptor to the device mapping kernel module 7.

In S22, the device mapping kernel module 7 submits the received result of the Standard Device Requests-Get Descriptor to the system device driver 8.

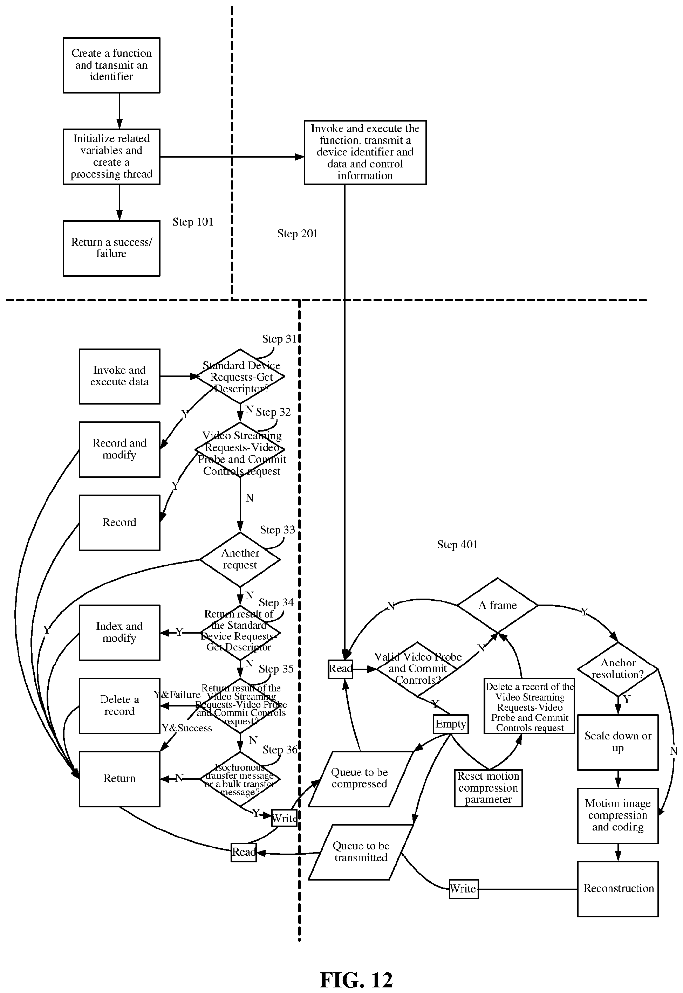

FIG. 12 is a flowchart of transfer, compression and parameter adjustment in a data transfer method according to an embodiment of the present invention. As shown in FIG. 12, the flow includes steps described below.

In step 101, a redirect terminal communication module invokes a redirect terminal cache compression reconstruction module to create a function, transmits an identifier of a USB video device, initializes variables related to the identifier of the USB video device (a queue to be compressed, a queue to be transmitted, a signal for notifying data arrival, a thread exit signal and the like) in the redirect terminal cache compression reconstruction module, creates a processing thread for the USB video device, and returns a success or a failure.

In step 201, the redirect terminal communication module invokes the redirect terminal cache compression reconstruction module to execute the function and transmits the identifier of the USB video device, and data and control information.

In step 31, the redirect terminal cache compression reconstruction module checks whether the data and control information is a request of Standard Device Requests-Get Descriptor. If the data and control information is the Standard Device Requests-Get Descriptor, the identifier of the USB video device, and a type and a serial number of a controls request are recorded, and the data and control information is directly returned to the redirect terminal communication module.

In step 32, if the data and control information is not the request of Standard Device Requests-Get Descriptor, the redirect terminal cache compression reconstruction module checks whether the data and control information is a request of Video Streaming Requests-Video Probe and Commit Controls request. If the data and control information is the Video Streaming Requests-Video Probe and Commit Controls request, the identifier of the USB video device, and the type and the serial number of the controls request are recorded. If a result of the Standard Device Requests-Get Descriptor has been modified, a format serial number (bFormatIndex) and a frame serial number (bFrameIndex) in the Video Streaming Requests-Video Probe and Commit Controls request need to be modified as values corresponding to a record of the result of the Standard Device Requests-Get Descriptor before modification according to a record and an index of a correspondence between the results after and before modification of the Standard Device Requests-Get Descriptor. If the system uses an anchor resolution (scales a high-resolution video down or a low-resolution video up to the anchor resolution), the format serial number (bFormatIndex) and the frame serial number (bFrameIndex) in the Video Streaming Requests-Video Probe and Commit Controls request need to be modified to values corresponding to the anchor resolution in the result of the Standard Device Requests-Get Descriptor according to an interface serial number (bInterfaceNumber), a format serial number (bFormatIndex), a frame serial number (bFrameIndex) and a relationship between a width (wWidth) and a height (wHeight) of a resolution in the result of the Standard Device Requests-Get Descriptor, and the data and control information is directly returned to the redirect terminal communication module.

In step 33, if the data and control information is not the Video Streaming Requests-Video Probe and Commit Controls request, the redirect terminal cache compression reconstruction module checks whether the data and control information is another request. If the data and control information is another request, the data and control information is directly returned to the redirect terminal communication module.

In step 34, if the data and control information is not another request, the redirect terminal cache compression reconstruction module checks whether the data and control information is a return result of the Standard Device Requests-Get Descriptor according to a record of the identifier of the USB video device, the type and the serial number of the controls request. If the data and control information is the return result of the Standard Device Requests-Get Descriptor, the return result is parsed, and the interface serial number (bInterfaceNumber), the format serial number (bFormatIndex), the frame serial number (bFrameIndex) and the relationship between the width (wWidth) and the height (wHeight) of the resolution are indexed. If a format/resolution parameter of the USB video device needs to be adjusted, a value is modified according to a definition of Video Streaming Interface Descriptors-Payload Format Descriptors/Video Frame Descriptor. If a highest resolution needs to be decreased, a frame whose resolution is smaller than a target resolution is deleted and the frame serial number bFrameIndex is reordered according to the definition of Video Streaming Interface Descriptors-Payload Format Descriptors/Video Frame Descriptor. If a lowest resolution needs to be increased, a frame whose resolution is larger than the target resolution is deleted and the frame serial number bFrameIndex is reordered according to the definition of Video Streaming Interface Descriptors-Payload Format Descriptors/Video Frame Descriptor. If a default resolution needs to be modified, the frame serial number bFrameIndex is reordered, a Video Frame Descriptor of a frame with the default resolution is ordered at a first position, a position of bFrameIndex 1, and a default frame serial number bDefaultFrameIndex in Payload Format Descriptors is modified to 1 according to the definition of Video Streaming Interface Descriptors-Payload Format Descriptors/Video Frame Descriptor, and a correspondence between the return result after modification and the return result before modification is recorded and indexed. If a high resolution needs to be scaled down or a low resolution needs to be scaled up to an anchor resolution, a frame with the target resolution is increased and the frame serial number bFrameIndex is reordered according to the definition of Video Streaming Interface Descriptors-Payload Format Descriptors/Video Frame Descriptor. If a camera includes a microphone or another sub-device and the system requires that these sub-devices are not redirected, an Interface Association Descriptor of the microphone or another sub-device is found in the return result of the Standard Device Requests-Get Descriptor, and the Interface Association Descriptor and an Interface Association Descriptor of a next other device are deleted or the Interface Association Descriptor to an Interface Association Descriptor at the end of the whole return result of the Standard Device Requests-Get Descriptor are deleted. The data and control information is returned to the redirect terminal communication module.

In step 35, if the data and control information is not the return result of the Standard Device Requests-Get Descriptor, the redirect terminal cache compression reconstruction module checks whether the data and control information is a return result of Video Streaming Requests-Video Probe and Commit Controls according to the record of the identifier of the USB video device, and the type and the serial number of the controls request. If the data and control information is the return result of Video Streaming Requests-Video Probe and Commit Controls, the return result is parsed. If the return result is the failure, a corresponding record is searched for and deleted, and the data and control information is returned to the redirect terminal communication module.

In step 36, if the data and control information is not the return result of Video Streaming Requests-Video Probe and Commit Controls, the redirect terminal cache compression reconstruction module checks whether the data and control information is a result of Isochronous Transfer IN (an isochronous transfer message) or a result of Bulk Transfer IN (a bulk transfer message) returned through a Video Streaming Interface. If the data and control information is the result of Isochronous Transfer IN or the result of Bulk Transfer IN, the result is replicated and placed into the queue to be compressed corresponding to the identifier of the USB video device, a signal for notifying data arrival is set, and a the current result is covered with a new result from a queue to be transmitted corresponding to the identifier of the USB video device. If the queue to be transmitted is empty, the content in the current result is emptied and a return length is set to zero, and the data and control information is returned to the redirect terminal communication module.

If the data and control information is not the result of Isochronous Transfer IN or the result of Bulk Transfer IN, the data and control information is directly returned to the redirect terminal communication module.

In step 401, after a processing thread corresponding to the identifier of the USB video device receives a data arrival signal, data in the queue to be compressed is processed, and video data after a Stream Header is stitched. When the video data is stitched into a frame, the stitched video data is transmitted into an interface of a motion image compression and coding algorithm. If the system uses the anchor resolution (scale the high-resolution video down or the low-resolution video up to the anchor resolution), the stitched frame of video data is scaled down or up and transmitted into the interface of the motion image compression and coding algorithm. The compressed video data and the stored Stream Header (an STI is set to zero) are reconstructed into a new result and placed into the queue to be transmitted. When a serial number of data in the result in the queue to be compressed is greater than a serial number in a record of Video Streaming Requests-Video Probe and Commit Controls, it indicates that the resolution or a format has been modified, the queue to be compressed and the queue to be transmitted are emptied, and a new parameter (such as the width (wWidth) and the height (wHeight) of the resolution recorded in the result of the Standard Device Requests-Get Descriptor corresponding to the format serial number (bFormatIndex) and the frame serial number (bFrameIndex) in the Video Streaming Requests-Video Probe and Commit Controls request) is used for invoking the motion image compression and coding algorithm to generate compressed data in a new format or with a new resolution, and the record of Video Streaming Requests-Video Probe and Commit Controls record is deleted.

It will be understood by those of ordinary skill in the art that all or part of the steps in the various methods described in the above-mentioned embodiments may be implemented by related hardware instructed by programs, and these programs may be stored in a computer-readable storage medium which may include a Read-Only Memory (ROM), a Random Access Memory (RAM), a magnetic disk, an optical disk or the like.

The above are only preferred embodiments of the present invention and are not intended to limit the scope of the present invention. Any modifications, improvements and the like made within the scope of the present invention should fall within the scope of the present invention.

## Claims

1. A data transfer method, comprising:
acquiring (100) Universal Serial Bus, USB, image data;
compressing (200), according to redirect information, the USB image data to acquire the compressed USB image data, wherein the redirect information comprises information for redirecting transfer data;
reconstructing (300) a redirect USB transfer message according to the compressed USB image data; and
transmitting (400) the redirect USB transfer message to a server; and **characterized in that**:
before compressing (200), according to the redirect information, the USB image data to acquire the compressed USB image data, the method further comprises: acquiring (200C), according to the USB image data and image stitching information, stitched USB image data, wherein the image stitching information comprises length information of the stitched USB image data; and
compressing (200), according to the redirect information, the USB image data to acquire the compressed USB image data further comprises: compressing (300C), according to the redirect information, the stitched USB image data to acquire the compressed USB image data.

2. The method of claim 1, wherein the redirect information comprises:
at least one of resolution information or image format information for redirecting the transfer data.

3. The method of claim 1, wherein the redirect USB transfer message comprises:
a redirect USB isochronous transfer message or a redirect USB bulk transfer message.

4. The method of claim 1, wherein acquiring (100) the USB image data comprises: receiving (100A) and parsing application layer data of a USB terminal to acquire the USB image data; and
reconstructing (300) the redirect USB transfer message according to the compressed USB image data comprises: reconstructing (300A) the redirect USB transfer message according to the compressed USB image data and a format of a USB transfer message.

5. The method of claim 4, wherein reconstructing (300A) the redirect USB transfer message according to the compressed USB image data and the format of the USB transfer message comprises:
acquiring the format of the USB transfer message;
encapsulating the compressed USB image data in a field for transferring a data packet in the format of the USB transfer message to acquire the redirect USB transfer message.

6. The method of claim 1, wherein acquiring (100) the USB image data comprises: receiving (100B) and parsing a USB transfer message transmitted by a USB terminal to acquire the USB image data; and
reconstructing (300) the redirect USB transfer message according to the compressed USB image data comprises: replacing (300B) the USB image data in the USB transfer message with the compressed USB image data to reconstruct the redirect USB transfer message.

7. The method of claim 2, wherein after transmitting (400) the redirect USB transfer message to the server, the method further comprises:
receiving (10) and parsing a setting modification message transmitted by the server, and acquiring a serial number and modification content information in the setting modification message, wherein the modification content information comprises modification content information about at least one of resolution or image format;
updating (20) the redirect information according to the modification content information to acquire the updated redirect information;
re-compressing (30), according to the updated redirect information, the compressed USB image data with a serial number larger than the serial number in the setting modification message to acquire modified compressed USB image data;
reconstructing (40) the redirect USB transfer message according to the modified compressed USB image data to acquire modified redirect USB transfer message; and
transmitting (50) the modified redirect USB transfer message to the server.

8. The method of claim 7, wherein before acquiring (100) the USB image data, the method further comprises:
receiving (9A) and parsing an insertion message transmitted by a USB terminal, and acquiring initial device information in the insertion message; and
acquiring (10A), according to the initial device information and device display modification information, device display information, wherein the device display modification information comprises information about modifying device information, displayed by the server, of the USB terminal; and
wherein after receiving (10, 20A) and parsing the setting modification message transmitted by the server, the method further comprises:
determining (30A), according to the setting modification message and the device display information, image collection information of the USB terminal, wherein the image collection information comprises at least one of a collection resolution or an image collection format; and
transmitting (40A) the image collection information to the USB terminal to enable the USB terminal to adjust, according to the image collection information, at least one of the collection resolution or the image collection format for collecting image data.

9. A data transfer method, comprising:
receiving (1A) and parsing a redirect Universal Serial Bus, USB, transfer message to acquire compressed USB image data in the redirect USB transfer message;
decompressing (2A), according to redirect information, the compressed USB image data to acquire USB image data, wherein the redirect information comprises at least one of resolution information or image format information for redirecting transfer data;
reconstructing (3A) a USB transfer message according to the USB image data; and
outputting (4A) the USB transfer message; and **characterized in that**:
the compressed USB image data is obtained, at a data transfer apparatus, by compressing stitched USB image data according to the redirect information, wherein the stitched USB image data is acquired according to the USB image data and image stitching information, wherein the image stitching information comprises length information of the stitched USB image data.

10. The method of claim 9, wherein before decompressing (2A), according to the redirect information, the compressed USB image data, the method further comprises:
receiving (1B) modification content information, and updating the redirect information according to the modification content information to acquire the updated redirect information,
wherein the modification content information comprises modification information about at least one of resolution or image format, and
generating (2B) and transmitting a setting modification message according to the modification content information; and
wherein before reconstructing (3A) the USB transfer message according to the USB image data, the method further comprises:
receiving (3B) and parsing modified redirect USB transfer message, to acquire modified compressed USB image data in the modified redirect USB transfer message, and
decompressing (4B), according to the updated redirect information, the modified compressed USB image data to acquire the USB image data.

11. A data transfer apparatus, comprising:
a memory, which is configured to store a program for data transfer; and
a processor, which is configured to execute the program, wherein the program, when executed, implements the data transfer method of any one of claims 1 to 8.

12. A server, comprising:
a memory, which is configured to store a program for data transfer; and
a processor, which is configured to execute the program, wherein the program, when executed, implements the data transfer method of claim 9 or 10.

13. A storage medium, comprising a stored program, wherein the program, when executed, implements the data transfer method of any one of claims 1 to 8.

14. A storage medium, comprising a stored program, wherein the program, when executed, implements the data transfer method of claim 9 or 10.

## Patentansprüche

1. Datenübermittlungsverfahren, umfassend:
Erlangen (100) von Universal Serial Bus(USB)-Bilddaten;
Komprimieren (200) der USB-Bilddaten gemäß Umleitungsinformationen, um die komprimierten USB-Bilddaten zu erlangen, wobei die Umleitungsinformationen Informationen zum Umleiten von Übermittlungsdaten umfassen;
Rekonstruieren (300) einer Umleitungs-USB-Übermittlungsnachricht gemäß den komprimierten USB-Bilddaten; und
Übertragen (400) der Umleitungs-USB-Übermittlungsnachricht an einen Server; und **dadurch gekennzeichnet, dass**:
das Verfahren vor dem Komprimieren (200) der USB-Bilddaten gemäß den Umleitungsinformationen, um die komprimierten USB-Bilddaten zu erlangen, ferner Folgendes umfasst: Erlangen (200C) von zusammengesetzten USB-Bilddaten gemäß den USB-Bilddaten und Bildzusammensetzungsinformationen, wobei die Bildzusammensetzungsinformationen Längeninformationen der zusammengesetzten USB-Bilddaten umfassen; und
das Komprimieren (200) der USB-Bilddaten gemäß den Umleitungsinformationen, um die komprimierten USB-Bilddaten zu erlangen, ferner Folgendes umfasst: Komprimieren (300C) der zusammengesetzten USB-Bilddaten gemäß den Umleitungsinformationen, um die komprimierten USB-Bilddaten zu erlangen.

2. Verfahren nach Anspruch 1, wobei die Umleitungsinformationen Folgendes umfassen:
mindestens eines von Auflösungsinformationen oder Bildformatinformationen zum Umleiten der Übermittlungsdaten.

3. Verfahren nach Anspruch 1, wobei die Umleitungs-USB-Übermittlungsnachricht Folgendes umfasst:
eine isochrone Umleitungs-USB-Übermittlungsnachricht oder eine Umleitungs-USB-Massenübermittlungsnachricht.

4. Verfahren nach Anspruch 1, wobei das Erlangen (100) der USB-Bilddaten Folgendes umfasst: Empfangen (100A) und Analysieren von Anwendungsschichtdaten eines USB-Endgeräts, um die USB-Bilddaten zu erlangen; und
das Rekonstruieren (300) der Umleitungs-USB-Übermittlungsnachricht gemäß den komprimierten USB-Bilddaten Folgendes umfasst: Rekonstruieren (300A) der Umleitungs-USB-Übermittlungsnachricht gemäß den komprimierten USB-Bilddaten und einem Format einer USB-Übermittlungsnachricht.

5. Verfahren nach Anspruch 4, wobei das Rekonstruieren (300A) der Umleitungs-USB-Übermittlungsnachricht gemäß den komprimierten USB-Bilddaten und dem Format der USB-Übermittlungsnachricht Folgendes umfasst:
Erlangen des Formats der USB-Übermittlungsnachricht;
Einkapseln der komprimierten USB-Bilddaten in einem Feld zum Übermitteln eines Datenpakets in dem Format der USB-Übermittlungsnachricht, um die Umleitungs-USB-Übermittlungsnachricht zu erlangen.

6. Verfahren nach Anspruch 1, wobei das Erlangen (100) der USB-Bilddaten Folgendes umfasst: Empfangen (100B) und Analysieren einer USB-Übermittlungsnachricht, die durch ein USB-Endgerät übertragen wird, um die USB-Bilddaten zu erlangen; und
das Rekonstruieren (300) der Umleitungs-USB-Übermittlungsnachricht gemäß den komprimierten USB-Bilddaten Folgendes umfasst: Ersetzen (300B) der USB-Bilddaten in der USB-Übermittlungsnachricht mit den komprimierten USB-Bilddaten, um die Umleitungs-USB-Übermittlungsnachricht zu rekonstruieren.

7. Verfahren nach Anspruch 2, wobei das Verfahren nach dem Übertragen (400) der Umleitungs-USB-Übermittlungsnachricht an den Server ferner Folgendes umfasst:
Empfangen (10) und Analysieren einer durch den Server übertragenen Einstellungsmodifikationsnachricht und Erlangen einer Seriennummer und von Modifikationsinhaltsinformationen in der Einstellungsmodifikationsnachricht, wobei die Modifikationsinhaltsinformationen
Modifikationsinhaltsinformationen über mindestens eines von Auflösung oder Bildformat umfassen;
Aktualisieren (20) der Umleitungsinformationen gemäß den Modifikationsinhaltsinformationen, um die aktualisierten Umleitungsinformationen zu erlangen;
erneutes Komprimieren (30) der komprimierten USB-Bilddaten mit einer Seriennummer, die größer ist als die Seriennummer in der Einstellungsmodifikationsnachricht, gemäß den aktualisierten Umleitungsinformationen, um modifizierte komprimierte USB-Bilddaten zu erlangen;
Rekonstruieren (40) der Umleitungs-USB-Übermittlungsnachricht gemäß den modifizierten komprimierten USB-Bilddaten, um eine modifizierte Umleitungs-USB-Übermittlungsnachricht zu erlangen; und
Übertragen (50) der modifizierten Umleitungs-USB-Übermittlungsnachricht an den Server.

8. Verfahren nach Anspruch 7, wobei das Verfahren vor dem Erlangen (100) der USB-Bilddaten ferner Folgendes umfasst:
Empfangen (9A) und Analysieren einer durch ein USB-Endgerät übertragenen Einfügungsnachricht und Erlangen von anfänglichen Vorrichtungsinformationen in der Einfügungsnachricht; und
Erlangen (10A) von Vorrichtungsanzeigeinformationen gemäß den anfänglichen Vorrichtungsinformationen und Vorrichtungsanzeige-Modifikationsinformationen, wobei die Vorrichtungsanzeige-Modifikationsinformationen Informationen über das Modifizieren von Vorrichtungsinformationen des USB-Endgeräts, die durch den Server angezeigt werden, umfassen; und
wobei das Verfahren nach dem Empfangen (10, 20A) und Analysieren der durch den Server übertragenen Einstellungsmodifikationsnachricht ferner Folgendes umfasst:
Bestimmen (30A) von Bilderfassungsinformationen des USB-Endgeräts gemäß der Einstellungsmodifikationsnachricht und den Vorrichtungsanzeigeinformationen, wobei die Bilderfassungsinformationen mindestens eines von einer Erfassungsauflösung oder einem Bilderfassungsformat umfassen; und
Übertragen (40A) der Bilderfassungsinformation an das USB-Endgerät, um das USB-Endgerät in die Lage zu versetzen, mindestens eines von der Erfassungsauflösung oder dem Bilderfassungsformat zum Erfassen von Bilddaten gemäß den Bilderfassungsinformationen anzupassen.

9. Datenübermittlungsverfahren, umfassend:
Empfangen (1A) und Analysieren einer Umleitungs-Universal Serial Bus(USB)- Übermittlungsnachricht, um komprimierte USB-Bilddaten in der Umleitungs-USB-Übermittlungsnachricht zu erlangen;
Dekomprimieren (2A) der komprimierten USB-Bilddaten gemäß Umleitungsinformationen, um USB-Bilddaten zu erlangen, wobei die Umleitungsinformationen mindestens eines von Auflösungsinformationen oder Bildformatinformationen zum Umleiten von Übermittlungsdaten umfassen;
Rekonstruieren (3A) einer USB-Übermittlungsnachricht gemäß den USB-Bilddaten; und
Ausgeben (4A) der USB-Übermittlungsnachricht; und **dadurch gekennzeichnet, dass**:
die komprimierten USB-Bilddaten an einer Datenübermittlungseinrichtung erhalten werden, indem zusammengesetzte USB-Bilddaten gemäß den Umleitungsinformationen komprimiert werden, wobei die zusammengesetzten USB-Bilddaten gemäß den USB-Bilddaten und Bildzusammensetzungsinformationen erlangt werden, wobei die Bildzusammensetzungsinformationen Längeninformationen der zusammengesetzten USB-Bilddaten umfassen.

10. Verfahren nach Anspruch 9, wobei das Verfahren vor dem Dekomprimieren (2A) der komprimierten USB-Bilddaten gemäß den Umleitungsinformationen ferner Folgendes umfasst:
Empfangen (1B) von Modifikationsinhaltsinformationen und Aktualisieren der Umleitungsinformationen gemäß den Modifikationsinhaltsinformationen, um die aktualisierten Umleitungsinformationen zu erlangen,
wobei die Modifikationsinhaltsinformationen Modifkationsinformationen über mindestens eines von Auflösung oder Bildformat umfassen, und
Generieren (2B) und Übertragen einer Einstellungsmodifikationsnachricht gemäß den Modifikationsinhaltsinformationen; und
wobei das Verfahren vor dem Rekonstruieren (3A) der USB-Übermittlungsnachricht gemäß den USB-Bilddaten ferner Folgendes umfasst:
Empfangen (3B) und Analysieren einer modifizierten Umleitungs-USB-Übermittlungsnachricht, um modifizierte komprimierte USB-Bilddaten in der modifizierten Umleitungs-USB-Übermittlungsnachricht zu erlangen, und
Dekomprimieren (4B) der modifizierten komprimierten USB-Bilddaten gemäß den aktualisierten Umleitungsinformationen, um die USB-Bilddaten zu erlangen.

11. Datenübermittlungseinrichtung, umfassend:
einen Speicher, der dazu konfiguriert ist, ein Programm zur Datenübermittlung zu speichern; und
einen Prozessor, der dazu konfiguriert ist, das Programm aufzuführen, wobei das Programm bei Ausführung das Datenübermittlungsverfahren nach einem der Ansprüche 1 bis 8 implementiert.

12. Server, umfassend:
einen Speicher, der dazu konfiguriert ist, ein Programm zur Datenübermittlung zu speichern; und
einen Prozessor, der dazu konfiguriert ist, das Programm aufzuführen, wobei das Programm bei Ausführung das Datenübermittlungsverfahren nach Anspruch 9 oder 10 implementiert.

13. Speichermedium, umfassend ein gespeichertes Programm, wobei das Programm bei Ausführung das Datenübermittlungsverfahren nach einem der Ansprüche 1 bis 8 implementiert.

14. Speichermedium, umfassend ein gespeichertes Programm, wobei das Programm bei Ausführung das Datenübermittlungsverfahren nach Anspruch 9 oder 10 implementiert.

## Revendications

1. Procédé de transfert de données, comprenant :
l'acquisition (100) de données d'images de bus série universel (USB) ;
la compression (200), en fonction des informations de redirection, des données d'images d'USB pour acquérir les données d'images d'USB compressées, dans lequel les informations de redirection comprennent des informations pour rediriger les données de transfert ;
la reconstruction (300) d'un message de transfert d'USB de redirection en fonction des données d'images d'USB compressées ; et
la transmission (400) du message de transfert d'USB de redirection à un serveur ; et **caractérisé en ce que** :
avant la compression (200), en fonction des informations de redirection, des données d'images d'USB pour acquérir les données d'images d'USB compressées, le procédé comprend en outre : l'acquisition (200C), en fonction des données d'images d'USB et des informations d'assemblage d'images, des données d'images d'USB assemblées, dans lequel les informations d'assemblage d'images comprennent les informations de longueur des données d'images d'USB assemblées ; et
la compression (200), en fonction des informations de redirection, des données d'images d'USB pour acquérir les données d'images d'USB compressées comprend en outre : la compression (300C), en fonction des informations de redirection, des données d'images d'USB assemblées pour acquérir les données d'images d'USB compressées.

2. Procédé selon la revendication 1, dans lequel les informations de redirection comprennent :
des informations de résolution et/ou des informations de format d'image pour rediriger les données de transfert.

3. Procédé selon la revendication 1, dans lequel le message de transfert d'USB de redirection comprend :
un message de transfert isochrone d'USB de redirection ou un message de transfert massif d'USB de redirection.

4. Procédé selon la revendication 1, dans lequel l'acquisition (100) des données d'images d'USB comprend : la réception (100A) et l'analyse des données de couche d'application d'un terminal USB pour acquérir les données d'images d'USB ; et
la reconstruction (300) du message de transfert d'USB de redirection en fonction des données d'images d'USB compressées comprend : la reconstruction (300A) du message de transfert d'USB de redirection en fonction des données d'images d'USB compressées et d'un format d'un message de transfert d'USB.

5. Procédé selon la revendication 4, dans lequel la reconstruction (300A) du message de transfert d'USB de redirection en fonction des données d'images d'USB compressées et du format du message de transfert d'USB comprend :
l'acquisition du format du message de transfert d'USB ;
l'encapsulation des données d'images d'USB compressées dans un champ pour transférer un paquet de données au format du message de transfert d'USB afin d'acquérir le message de transfert d'USB de redirection.

6. Procédé selon la revendication 1, dans lequel l'acquisition (100) des données d'images d'USB comprend : la réception (100B) et l'analyse d'un message de transfert d'USB transmis par un terminal USB pour acquérir les données d'images d'USB ; et
la reconstruction (300) du message de transfert d'USB de redirection en fonction des données d'images d'USB compressées comprend : le remplacement (300B) des données d'images d'USB dans le message de transfert d'USB par les données d'images d'USB compressées afin de reconstruire le message de transfert d'USB de redirection.

7. Procédé selon la revendication 2, dans lequel, après la transmission (400) du message de transfert d'USB de redirection au serveur, le procédé comprend en outre :
la réception (10) et l'analyse d'un message de modification de paramètres transmis par le serveur, et l'acquisition d'un numéro de série et d'informations sur le contenu de la modification dans le message de modification de paramètres, dans lequel les informations sur le contenu de la modification comprennent des informations sur le contenu de la modification concernant une résolution et/ou un format d'image ;
la mise à jour (20) des informations de redirection en fonction des informations sur le contenu de la modification pour acquérir les informations de redirection mises à jour ;
la recompression (30), en fonction des informations de redirection mises à jour, des données d'images d'USB compressées avec un numéro de série supérieur au numéro de série du message de modification des paramètres pour acquérir des données d'images d'USB compressées modifiées ;
la reconstruction (40) du message de transfert d'USB de redirection en fonction des données d'images d'USB compressées modifiées pour acquérir le message de transfert d'USB de redirection modifié ; et
la transmission (50) du message de transfert d'USB de redirection modifié au serveur.

8. Procédé selon la revendication 7, dans lequel, avant l'acquisition (100) des données d'images d'USB, le procédé comprend en outre :
la réception (9A) et l'analyse d'un message d'insertion transmis par un terminal USB, et l'acquisition des informations initiales de dispositif dans le message d'insertion ; et
l'acquisition (10A), en fonction des informations initiales de dispositif et des informations de modification d'affichage de dispositif, d'informations d'affichage de dispositif, dans lequel les informations de modification d'affichage de dispositif comprennent des informations concernant la modification d'informations de dispositif, affichées par le serveur, du terminal USB ; et
dans lequel, après la réception (10, 20A) et l'analyse du message de modification de paramètres transmis par le serveur, le procédé comprend en outre :
la détermination (30A), en fonction du message de modification de paramètres et des informations d'affichage de dispositif, d'informations de collecte d'images du terminal USB, dans lequel les informations de collecte d'images comprennent une résolution de collecte et/ou un format de collecte d'images ; et
la transmission (40A) des informations de collecte d'images au terminal USB pour permettre au terminal USB d'ajuster, en fonction des informations de collecte d'images, la résolution de collecte et/ou le format de collecte d'images pour la collecte de données d'images.

9. Procédé de transfert de données, comprenant :
la réception (1A) et l'analyse d'un message de transfert de bus série universel (USB) de redirection pour acquérir des données d'images d'USB compressées dans le message de transfert d'USB de redirection ;
la décompression (2A), en fonction des informations de redirection, des données d'images d'USB compressées pour acquérir des données d'images d'USB, dans lequel les informations de redirection comprennent des informations de résolution et/ou des informations de format d'image pour rediriger les données de transfert ;
la reconstruction (3A) d'un message de transfert d'USB en fonction des données d'images d'USB ; et
l'émission (4A) du message de transfert d'USB ; et **caractérisé en ce que** :
les données d'images d'USB compressées sont obtenues, au niveau d'un appareil de transfert de données, par la compression des données d'images d'USB assemblées en fonction des informations de redirection, dans lequel les données d'images d'USB assemblées sont acquises en fonction des données d'images d'USB et des informations d'assemblage d'images, dans lequel les informations d'assemblage d'images comprennent les informations de longueur des données d'images d'USB assemblées.

10. Procédé selon la revendication 9, dans lequel, avant la décompression (2A), en fonction des informations de redirection, des données d'images d'USB compressées, le procédé comprend en outre :
la réception (1B) des informations sur le contenu de la modification, et la mise à jour des informations de redirection en fonction des informations sur le contenu de la modification pour acquérir les informations de redirection mises à jour,
dans lequel les informations sur le contenu de la modification comprennent des informations de modification concernant la résolution et/ou le format d'image, et
la génération (2B) et la transmission d'un message de modification de paramètres en fonction des informations sur le contenu de la modification ; et
dans lequel, avant la reconstruction (3A) du message de transfert d'USB en fonction des données d'images d'USB, le procédé comprend en outre :
la réception (3B) et l'analyse du message de transfert d'USB de redirection modifié, afin d'acquérir des données d'images d'USB compressées modifiées dans le message de transfert d'USB de redirection modifié, et
la décompression (4B), en fonction des informations de redirection mises à jour, des données d'images d'USB compressées modifiées pour acquérir les données d'images d'USB.

11. Appareil de transfert de données, comprenant :
une mémoire, qui est configurée pour stocker un programme pour le transfert de données ; et
un processeur, qui est configuré pour exécuter le programme, dans lequel le programme, lorsqu'il est exécuté, met en œuvre le procédé de transfert de données selon l'une quelconque des revendications 1 à 8.

12. Serveur, comprenant :
une mémoire, qui est configurée pour stocker un programme pour le transfert de données ; et
un processeur, qui est configuré pour exécuter le programme, dans lequel le programme, lorsqu'il est exécuté, met en œuvre le procédé de transfert de données selon la revendication 9 ou 10.

13. Support de stockage, comprenant un programme stocké, dans lequel le programme, lorsqu'il est exécuté, met en œuvre le procédé de transfert de données selon l'une quelconque des revendications 1 à 8.

14. Support de stockage, comprenant un programme stocké, dans lequel le programme, lorsqu'il est exécuté, met en œuvre le procédé de transfert de données selon la revendication 9 ou 10.
